# EUROPEAN PATENT APPLICATION

(11) **EP 4 684 984 A1**
(43) Date of publication of application: **28.01.2026**
(21) Application number: 25191380.2
(22) Date of filing: 23.07.2025
(51) Int. Cl.: B60C 23/04

(54) **TIRE MONITORING DEVICE**

(30) Priority: 23.07.2024 GB 202410769
(71) Applicant: Airbus Operations Limited, Bristol BS34 7PA (GB)
(72) Inventor: BILL, Andrew, Bristol, BS34 7PA (GB)
(74) Representative: EIP

(57) **Abstract**

Disclosed is a tire monitoring device configured to operate in a normal operational mode and an altered operational mode. In the normal operational mode, tire monitoring device is configured to, in response to a first request, transmit first status information to a further tire monitoring device. In the altered operational mode the tire monitoring device is configured to, in response to a second request, transmit second status information to at least one of a remote device and a user of the remote device, the second status information including an indication as to whether a pressure sensed by the tire monitoring device is within a pre-determined threshold from a reference pressure stored by the tire monitoring device.

## Description

### TECHNICAL FIELD

The present invention relates to a tire monitoring device, a system comprising tire monitoring devices, and associated methods of operating tire monitoring devices.

### BACKGROUND

Confirming tire pressure is an important part of the maintenance of an aircraft. Tire pressures should be maintained at predetermined pressures to ensure that a tire performs as intended by the manufacturer. Incorrect tire pressure can lead to a tire failing, perhaps bursting and causing damage to the aircraft and/or a loss of control.

### SUMMARY

A first aspect of the present invention provides a tire monitoring device configured to operate in: a normal mode in which the tire monitoring device is configured to, in response to a first request, transmit first status information to a further tire monitoring device; and an altered operational mode in which the tire monitoring device is configured to, in response to a second request, transmit second status information to at least one of a remote device and a user of the remote device, the second status information comprising an indication as to whether a pressure sensed by the tire monitoring device is within a pre-determined threshold from a reference pressure stored by the tire monitoring device.

In the normal operational mode, by transmitting the first status information to the further tire monitoring device, the further tire monitoring device can act as a point of interrogation for a user wishing to obtain the first status information from the tire monitoring device. This may, for example, provide for improved speed of a tire check process, by enabling the user to stand at the further tire monitoring device to interrogate the tire monitoring device. In practice, this may enable a user to interrogate multiple tire monitoring devices by standing at a single tire monitoring device, thereby negating the need for the user to walk between tire monitoring devices to perform multiple tire checks.

However, it will be appreciated that a tire check may be desired to be performed when the tire monitoring device is in an altered operational mode, for example a mode in which the tire monitoring device is unable to communicate with the further tire monitoring device. As the tire monitoring device is configured to, in response to the second request, transmit the second status information to at least one of the remote device and the user of the remote device, a tire check may still be able to be performed where the tire monitoring device is in the altered operational mode.

Optionally, the altered operational mode comprises a mode in which operation of at least one of a hardware component and a software component of the tire monitoring device is altered relative to its intended operational state. Optionally, the altered operational mode comprises a mode in which at least one of a hardware component and a software component of the tire monitoring device is operating with reduced or no functionality.

Optionally, the second request is different to the first request, for example comprising a different format to the first request. Optionally, the second request comprises a request for the tire monitoring device to transmit the second status information to the at least one of the remote device and the user of the remote device. Optionally, the first request comprises a request for the tire monitoring device to transmit the first status information to the further tire monitoring device.

The normal operational mode comprises a mode in which the tire monitoring device is able to communicate with the further tire monitoring device. Optionally, the altered operational mode comprises a mode in which the tire monitoring device is unable to communicate with the further tire monitoring device. Optionally, the tire monitoring device is configured to wirelessly communicate with the further tire monitoring device, for example in at least the normal operational mode.

Optionally, the first request is received from the further tire monitoring device. Optionally, the first request is received from the remote device. Optionally, the second request is received from the remote device.

Optionally, the remote device comprises a handheld device, for example a tablet device or mobile phone.

Optionally, the first status information comprises an indication as to whether a pressure sensed by the tire monitoring device is within the pre-determined threshold from the reference pressure stored by the tire monitoring device. Optionally, the first status indication comprises a pressure sensed by the tire monitoring device.

Optionally, in the altered operational mode, the tire monitoring device is configured to, in response to an activation signal received from the remote device, transition from a sleep mode in which the tire monitoring device is unable to receive the second request, to an awake mode in which the tire monitoring device is able to receive the second request.

Optionally, in the altered operational mode, the tire monitoring device is configured to receive the activation signal via a short range communication protocol.

Optionally, the short range communication protocol has a range of less than 5m, less than 2m, less than 1m, less than 50, less than 30cm, or less than 10cm. Optionally the short range communication protocol comprises one of near field communication (NFC) and radio frequency identification (RFID).

Optionally, the tire monitoring device comprises a short range transmitter.

Optionally, the tire monitoring device is configured to transmit the first status information to the further tire monitoring device using a long range communication protocol. Optionally, the long range communication protocol has a range of at least 10m, at least 20m, at least 50m, or at least 75m. Optionally, the long range communication protocol is one of Bluetooth and Wi-Fi. Optionally, the tire monitoring device comprises a long range transmitter.

Optionally, the tire monitoring device is configured to receive the second request via the short range communication protocol. Optionally, the tire monitoring device is configured to receive the second request via the long range communication protocol.

Optionally, the tire monitoring device is configured to transmit the second status information via the short range communication protocol, for example to the remote device. Optionally, the tire monitoring device is configured to transmit the second status information via the long range communication protocol, for example to the remote device.

Optionally, the second status information comprises at least one of a pressure sensed by the tire monitoring device, a temperature sensed by the tire monitoring device, historical pressure and/or temperature readings stored by the tire monitoring device, information regarding inoperability of at least one hardware component of the tire monitoring device, information regarding inoperability of at least one software component of the tire monitoring device, and information regarding an inability of the tire monitoring device to communicate with the further tire monitoring device.

Optionally, the tire monitoring device comprises a transmitter configured to transmit a status signal that encodes the second status information, wherein the status signal is configured to be received and understood by a human.

Optionally, the transmitter comprises a visual indicator, and the status signal comprises a visual signal.

Optionally, the visual indicator comprises a light source. Optionally, the tire monitoring device is configured to selectively illuminate the light source to transmit the status signal. The light source may comprise a Light Emitting Diode (LED). The light source may be a multi-purpose light source, for example a light source configured to provide functionality in addition to transmitting the status signal.

Optionally, the visual indicator is configured to light in a first colour when the status signal indicates that the pressure sensed by the tire monitoring device is within the pre-determined threshold from the reference pressure, and to light in a second colour, different to the first colour, when the status signal indicates that the pressure sensed by the tire monitoring device is outside the pre-determined threshold from the reference pressure.

Optionally, in the normal operational mode, the transmitter is configured to transmit a further status signal that encodes the first status information, wherein the further status signal is configured to be received and understood by a human. Optionally, the visual indicator is configured to light in a first colour when the further status signal indicates that the pressure sensed by the tire monitoring device is within the pre-determined threshold from the reference pressure, and to light in a second colour, different to the first colour, when the further status signal indicates that the pressure sensed by the tire monitoring device is outside the pre-determined threshold from the reference pressure.

Optionally, in the normal operational mode, the tire monitoring device is configured to, in response to a third request, transmit third status information to at least one of the remote device and a user of the remote device, the third status information comprising an indication as to whether a pressure sensed by the tire monitoring device is within the pre-determined threshold from a reference pressure stored by the tire monitoring device.

Optionally, the third request is received from the remote device. Optionally, the transmitter is configured to transmit a third status signal that encodes the third status information, wherein the third status signal is configured to be received and understood by a human. Optionally, the transmitter comprises a visual indicator configured to light in a first colour when the third status signal indicates that the pressure sensed by the tire monitoring device is within the pre-determined threshold from the reference pressure, and to light in a second colour, different to the first colour, when third status signal indicates that the pressure sensed by the tire monitoring device is outside the pre-determined threshold from the reference pressure.

Optionally, the tire monitoring device is a tire pressure monitoring device. Optionally, the tire monitoring device comprises a tire pressure sensor. Optionally, the tire monitoring device comprises a temperature sensor.

Optionally, the tire monitoring device is an aircraft tire monitoring device.

A second aspect of the present invention provides a system comprising a tire monitoring device according the first aspect of the present invention, and a further tire monitoring device configured to transmit the first request to the tire monitoring device, and receive the first status information from the tire monitoring device.

Optionally, the further tire monitoring device is configured to, when operating in an altered operational mode, and in response to a status request received from the remote device, transmit further device status information to at least one of the remote device and a user of the remote device. Optionally, the further device status information comprises an indication as to whether a pressure sensed by the further tire monitoring device is within a pre-determined threshold from a further reference pressure stored by the further tire monitoring device. Optionally, the further device status information comprises at least one of a pressure sensed by the further tire monitoring device, a temperature sensed by the further tire monitoring device, historical pressure and/or temperature readings stored by the further tire monitoring device, information regarding inoperability of at least one hardware component of the further tire monitoring device, information regarding inoperability of at least one software component of the further tire monitoring device, and information regarding an inability of the further tire monitoring device to communicate with the tire monitoring device.

Optionally, the further tire pressure monitoring device is configured to transmit a confirmation signal to at least one of the remote device and the user of the remote device, the confirmation signal indicative of the first status information received from the tire pressure monitoring device, for example indicative of whether the pressure sensed by the tire monitoring device is within the pre-determined threshold from the reference pressure stored by at least one of the tire monitoring device and the further tire monitoring device.

Optionally, the further tire monitoring device comprises a further transmitter configured to transmit a confirmation signal that encodes the first status information, wherein the status signal is configured to be received and understood by a human.

Optionally, the further transmitter comprises a visual indicator, and the confirmation signal comprises a visual signal. Optionally, the visual indicator comprises a light source. The light source may comprise a Light Emitting Diode (LED). The light source may be a multi-purpose light source, for example a light source configured to provide functionality in addition to transmitting the configuration data signal. Optionally, the visual indicator is configured to light in a first colour when the confirmation signal indicates that the pressure sensed by the tire monitoring device is within the pre-determined threshold from the reference pressure, and to light in a second colour, different to the first colour, when the confirmation signal indicates that the pressure sensed by the tire monitoring device is outside the pre-determined threshold from the reference pressure.

Optionally, the further tire monitoring device is configured to operate in a further normal operational mode corresponding substantially to the normal operational mode of the tire monitoring device. For example, the further tire monitoring device may be configured to transmit, in response to a request, its status information to another tire monitoring device, which may be the tire monitoring device of the first aspect of the present invention. Optionally, the further tire monitoring device is configured to operate in a further altered operational mode corresponding substantially to the altered operational mode of the tire monitoring device. For example, the further tire monitoring device may be configured to transmit, in response to a request, and to at least one of the remote device and a user of the remote device, information comprising an indication as to whether a pressure sensed by the further tire monitoring device is within a pre-determined threshold from a reference pressure stored by the further tire monitoring device.

Optionally, the system comprises a plurality of tire monitoring devices according to the first aspect of the present invention and/or a plurality of further tire monitoring devices.

A third aspect of the present invention provides an aircraft comprising the tire monitoring device according to the first aspect of the present invention, or the system according to the second aspect of the present invention.

A fourth aspect of the present invention provides a data carrier comprising machine readable instructions that, when executed, cause operation of one or more processors of a tire monitoring device to: when the tire monitoring device is in a normal operational mode, and in response to a first request, cause transmission of first status information to a further tire monitoring device; and when the tire monitoring device is in an altered operational mode, and in response to a second request, cause transmission of second status information to at least one of a remote device and a user of the remote device, the second status information comprising an indication as to whether a pressure sensed by the tire monitoring device is within a pre-determined threshold from a reference pressure stored by the tire monitoring device.

A fifth aspect of the present invention provides a method comprising: transmitting, when a first tire monitoring device is in a normal operational mode, and in response to a first request, first status information from the first tire monitoring device to a second tire monitoring device; and transmitting, when the first tire monitoring device is in an altered operational mode, and in response to a second request, second status information from the first tire monitoring device to at least one of a remote device and a user of the remote device, the second status information comprising an indication as to whether a pressure sensed by the first tire monitoring device is within a pre-determined threshold from a reference pressure stored by the first and monitoring device.

Optionally, the method comprises: receiving, at the first tire monitoring device and from the second tire monitoring device, the first request; and/or receiving, at the first tire monitoring device and from the remote device, the second request.

Optionally, the method comprises, prior to transmitting the second status information associated with the first tire monitoring device, receiving, at the first tire monitoring device and from the remote device, an activation signal, and based on the activation signal and at the first tire monitoring device transitioning from a sleep mode in which the tire monitoring device is unable to receive the second request, to an awake mode in which the tire monitoring device is able to receive the second request.

Optionally, the method comprises, when the first tire monitoring device is in the altered operational mode, transmitting, using a transmitter of the first tire monitoring device, a status signal that encodes the second status information, wherein the status signal is configured to be received and understood by a human.

Optionally, the transmitter comprises a visual indicator, and the status signal comprises a visual signal.

Optionally, the method comprises, when the first tire monitoring device is in the normal operational mode, transmitting, using a transmitter of the first tire monitoring device, a further status signal that encodes the first status information, wherein the further status signal is configured to be received and understood by a human.

Optionally, the method comprises, when the first tire monitoring device is in the normal operational mode and in response to a third request, transmitting third status information from the first tire monitoring device to at least one of the remote device and a user of the remote device, the third status information comprising an indication as to whether a pressure sensed by the first tire monitoring device is within the pre-determined threshold from a reference pressure stored by the first tire monitoring device.

Optionally, the method comprises transmitting, from the second tire monitoring device, a confirmation signal in response to receipt of the first status information from the first tire monitoring device. Optionally, the confirmation signal is indicative of whether a pressure sensed by the first tire monitoring device is within a pre-determined threshold from a reference pressure stored by at least one of the first tire monitoring device and the second tire monitoring device.

Optional features of aspects of the present invention may be equally applied to other aspects of the present invention, where appropriate.

### BRIEF DESCRIPTION OF THE DRAWINGS

Embodiments of the invention will now be described, by way of example only, with reference to the accompanying drawings, in which:
Figure 1 shows a schematic view of a tire pressure monitoring device;
Figure 2 shows a schematic view of an aircraft incorporating a number of tire pressure monitoring devices as shown in Figure 1;
Figure 3 shows a schematic view of a system of tire pressure monitoring devices;
Figure 4 shows a flow chart of a tire pressure check process that can be used with the example of Figure 1;
Figure 5 shows a flow chart of tire pressure check process that can be used by the tire pressure monitoring device of Figure 1;
Figure 6 shows a flow chart of a measurement process which can be used by the tire pressure monitoring device of Figure 1; and
Figure 7 shows a flow chart of an example method performed by the tire pressure monitoring device of Figure 1.

### DETAILED DESCRIPTION

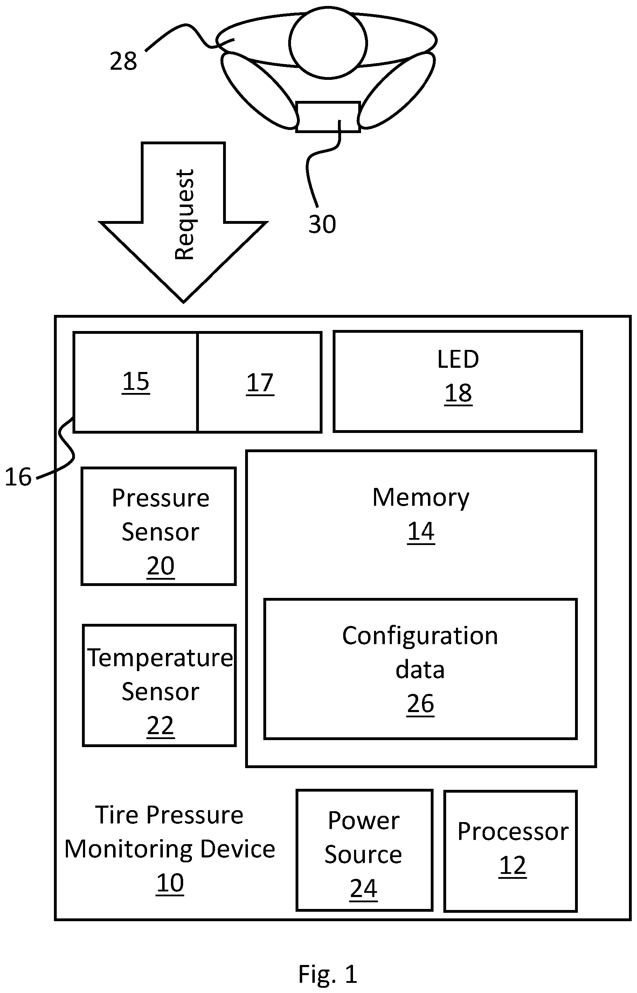

A tire pressure monitoring device 10 according to an example is shown schematically in Figure 1. The tire pressure monitoring device 10 comprises a processor 12, a memory 14, a transceiver 16, a visual indicator or display which is an LED 18 in this example, a pressure sensor 20, a temperature sensor 22, and a power source 24.

The processor 12 may be any suitable processor including single and multi-core processors, an Application Specific Integrated Circuit (ASIC) or the like. The processor 12 is communicatively coupled to the memory 14, the transceiver 16, the LED 18, the pressure sensor 20, the temperature sensor 22, and the power source 24.

The memory 14 is a flash memory that stores configuration data 26 and also computer readable instructions for execution by the processor 12 in operation, although it will be appreciated that other types of memory may be used. The configuration data 26 can therefore be updated as required with configuration data. A reference tire pressure is stored in the configuration data 26. Additional data can also be stored in the configuration data 26, for example an aircraft identifier (such as an aircraft Tail identifier) and a wheel position.

The transceiver 16 comprises a first 15 short-range radio signal transceiver operating according to the NFC protocol, and a second 17 transceiver operating according to a Bluetooth low energy (BLE) communication protocol. Although described here as operating according to specific protocols, it will be appreciated that other embodiments where the first 15 and second 17 transceivers operate according to different protocols, for example with the second transceiver 17 operating via a WiFi protocol, are also envisaged.

The LED 18 is a three-colour LED which is capable of displaying red, blue, and green coloured light. Other examples may use a different number of colours of light than three and/or use other colours than red, blue, and green. Still further examples may utilise a display screen, for example an LCD screen, instead of or in addition to the LED 18. The LED 18 can be used to display light to a user 28, and in examples herein, the user 28 is a human. As the user 28 can be taken to be a trusted source, and the tire pressure monitoring device 10 is itself a trusted source, an untrusted device 30 can be used to input the user's verification of various data, as will be discussed in more detail hereafter. The untrusted device 30 can be considered a remote device, in that it is remote from the tire pressure monitoring device 10, and can comprise a tablet or mobile phone running tire monitoring software.

The pressure sensor 20 is connected to the processor 12 and may be any suitable sensor for measuring pressure, for example a capacitive sensor. Similarly, the temperature sensor 22 is connected to the processor 12 and may be any suitable sensor for measuring temperature, such as a thermocouple. The temperature sensor 22 may be arranged to measure the temperature of the wheel or the temperature of gas inside the tire directly. Where the temperature sensor 22 measures the temperature of the wheel, this can be processed to determine the temperature of the gas in the tire. For example, an algorithm or look-up table may be used.

The connection of the pressure sensor 20 and the temperature sensor 22 to the processor 12 may be digital, providing a digital representation of the measured pressure and/or temperature from an Analogue to Digital Convertor (ADC) in the sensor itself, or analogue, in which case the processor may include an ADC to sample the received signal. Including both a pressure sensor 20 and a temperature sensor 22 may be useful to determine a temperature compensated pressure value. Although this example includes a pressure sensor 20 and a temperature sensor 22, other examples may include only a pressure sensor, or may include further sensors.

The power source 24 provides power to the elements of the tire pressure monitoring device 10. In this example, the power source 24 is a Lithium battery with power sufficient to run the sensor in normal operation for about 2 to 3 years. In other examples, the power source 24 may comprise a power harvesting system, for example harvesting vibration and/or electromagnetic radiation to charge a capacitor or battery which is then used to power the device 10.

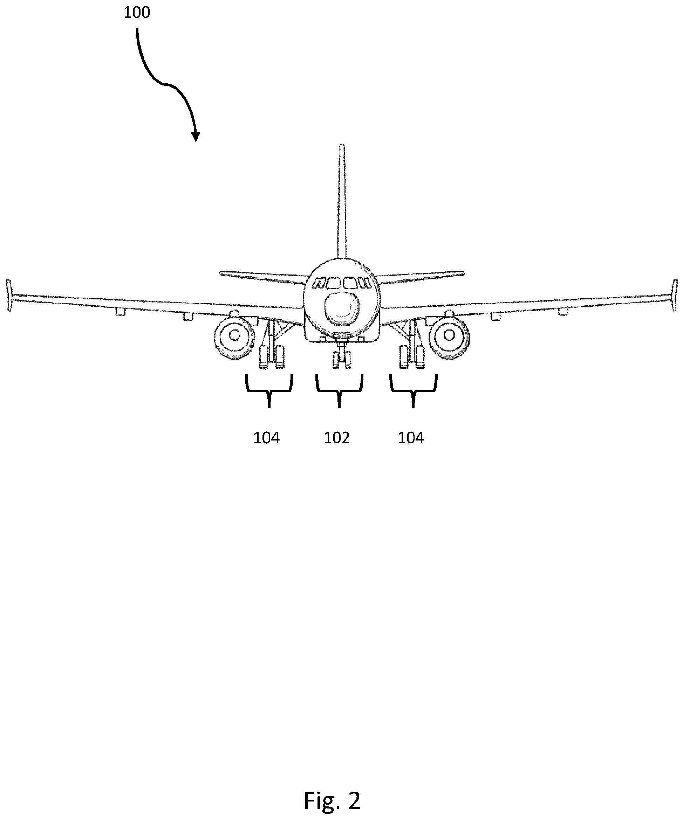

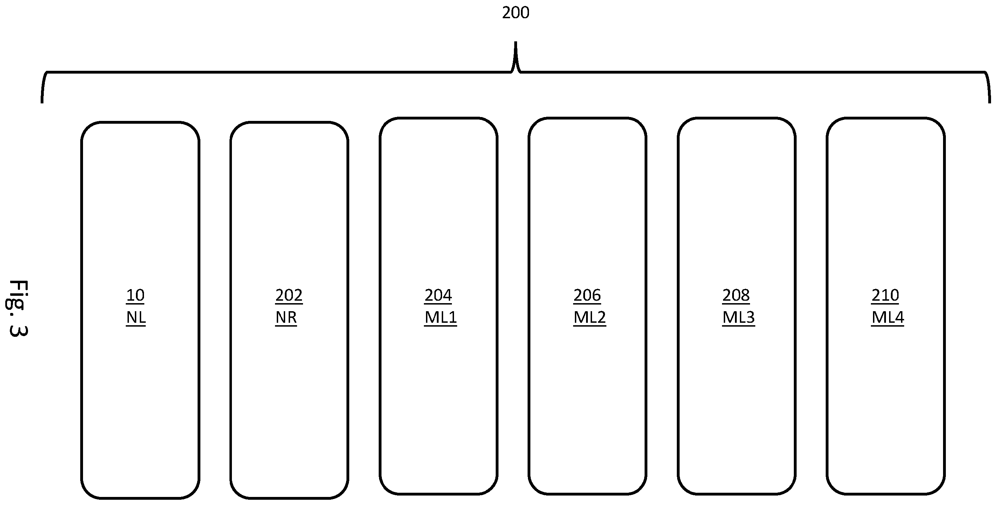

The tire pressure monitoring device 10 is installed on an aircraft 100 in use, and is one of a network 200 of tire pressure monitoring devices, with the aircraft 100 illustrated schematically in Figure 2, and the network 200 of tire pressure monitoring devices illustrated schematically in Figure 3. As an example, the aircraft 100 has a first group 102 of two nose wheels, and a second group 104 of four main landing gear wheels. Each wheel in the first 102 and second 104 groups of wheels has an associated tire pressure monitoring device, such that there are six tire pressure monitoring devices installed on the aircraft 100.

As illustrated in Figure 3, the tire pressure monitoring device 10 is a first tire pressure monitoring device utilised as a left nose tire pressure monitoring device 10, with a second tire pressure monitoring device 202 being a right nose tire pressure monitoring device, a third tire pressure monitoring device 204 being a first main landing gear tire pressure monitoring device, a fourth tire pressure monitoring device 206 being a second main landing gear tire pressure monitoring device, a fifth tire pressure monitoring device 208 being a third main landing gear tire pressure monitoring device, and a sixth tire pressure monitoring device 210 being a fourth main landing gear tire pressure monitoring device. It will be appreciated that each of the second 202 through sixth 210 tire pressure monitoring devices has substantially the same structure and functionality as the first tire pressure monitoring device 10 illustrated in Figure 1. It will further be appreciated that the locations of each tire pressure monitoring device 10,202,204,206,208,210 are illustrative only, and that any of the tire pressure monitoring devices 10,202,204,206,208,210 could be used at any wheel location on an aircraft, if so desired.

When initially installed on the aircraft 100, the tire pressure monitoring devices 10,202,204,206,208,210 are not configured, i.e., do not store the configuration data 20, and are incapable of direct communication between one another. The user 28 therefore uses the untrusted device 30 to configure the network 200 of tire pressure monitoring devices 10,202,204,206,208,210 such that the tire pressure monitoring devices 10,202,204,206,208,210 are able to communicate wirelessly with one another via the respective second transceivers 17. Full details of the configuration process are not described here for sake of brevity, but an example of such a configuration process is the configuration process described in European patent application no. EP22305399.2.

Once the tire pressure monitoring devices 10,202,204,206,208,210 are configured, the tire pressure monitoring devices 10,202,204,206,208,210 can be considered to be in a normal operational mode, and tire pressure checks can be performed.

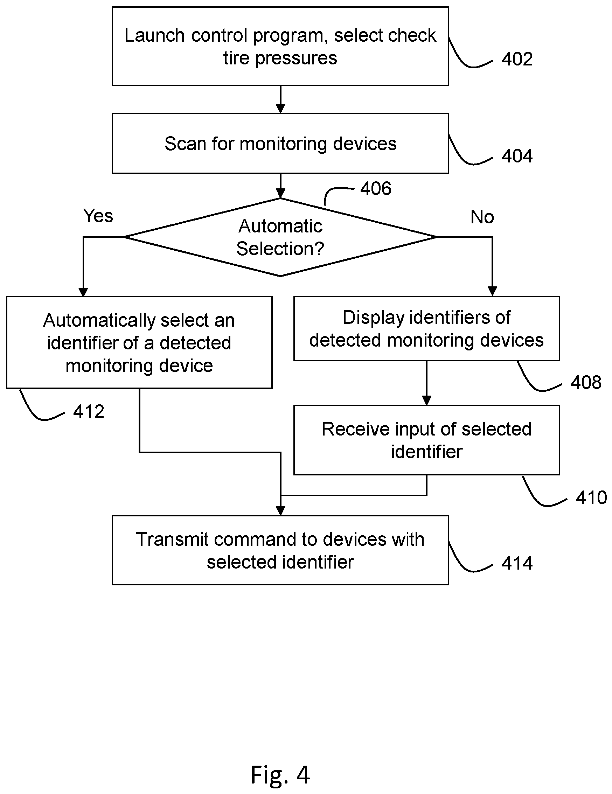

Figure 4 shows a flow chart of a tire pressure check process that can be used with the example tire pressure monitoring device of Figure 1. First, at block 402, the user 28 launches a tire monitoring control application on the untrusted device 30. During initialization of the application, a check is made that a wireless communication interface for communication with the tire pressure monitoring devices 10,202,204,206,208,210 is active on the untrusted device 30 and the user 28 is prompted to activate it, if it is not active.

Next, at block 404, the untrusted device 30 scans for tire monitoring devices in range. For example, the untrusted device 30 may send out a probe which causes any tire monitoring devices in range to respond with an indication of their aircraft identifier, such as a tail identifier of an aircraft to which the tire monitoring device is attached. The scanning may comprise establishing direct, point-to-point contact with each tire monitoring device, or contact through the network 200 of tire monitoring devices, for example through an access point, a master device, or any device in a mesh network. The scanning may comprise waking the tire monitoring devices from a low power mode, such as a sleep mode. The scanning may comprise using a secure network key to communicate with the sensor network.

Depending on the communication range and location, tire monitoring devices associated with more than one aircraft may be detected. For example, several aircraft may be in the same hanger in range of the untrusted device 30. Next, at block 406, it is determined whether an identifier should be selected automatically, without requiring user input. For example, the application may store a configuration option as to whether an identifier should be selected automatically or not. If automatic selection is not required, the process continues to block 408. If automatic selection is required, the process continues to block 412. In some examples, block 406 is not included. In these examples, the process can continue with either manual selection or automatic selection as explained below.

For manual selection, at block 408, the untrusted device 30 displays the identifiers of detected aircraft. At block 410, input is received of a selected identifier, for example from a user selection of the desired identifier.

For automatic selection, at block 412, an aircraft identifier is automatically selected from amongst the identifiers indicated in the received responses. This can be done in various ways. For example, when each tire monitoring device in range responds individually to the untrusted device 30, at least two responses may be from tire monitoring devices associated with the same aircraft identifier. In that case, the aircraft identifier associated with the largest number of responses may selected automatically because that is likely to be the aircraft closest to the untrusted device 30 for which pressure measurement is required. In another example, the aircraft identifier of the tire monitoring device closest to the untrusted device may be selected, for example a response having a greatest Received Signal Strength Indication (RSSI). In a further example, all detected tire monitoring devices may be associated with the same aircraft identifier, in which case that is selected.

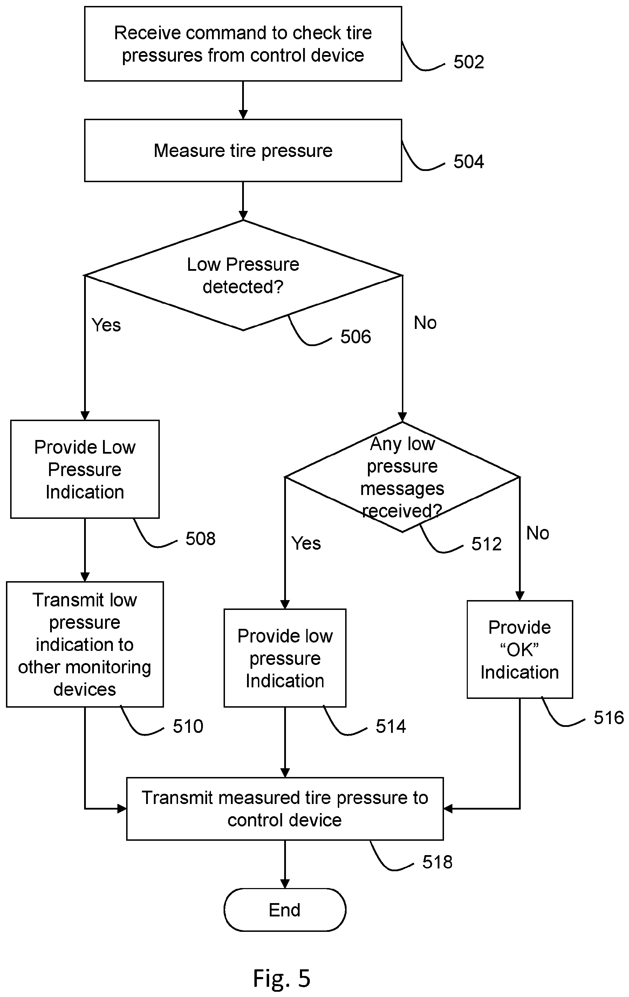

Next, at block 414, a command is sent to the tire monitoring devices corresponding to the selected identifier to cause them to read the pressures and report back to the untrusted device 30. For example, they may execute a process as described below with reference to Figure 5.

Figure 5 shows a flow chart of tire pressure check process that can be used by the tire pressure monitoring device 10 of Figure 1, or indeed by any of the tire pressure monitoring devices 10,202,204,206,208,210. This process is provided to provide additional assurance and fault tolerance in the pressure measurements from the system 200, for example to guard against corrupt operation or errors in the untrusted device 30. Through this process, the tire pressure monitoring device 10 uses its LED 18 to provide an indication of tire pressure status independent of the untrusted device 30. In some examples, the indication of tire pressure status by the tire pressure monitoring device 10 may have a higher Development Assurance Level (DAL) than the indication provided on the untrusted device 30. For example, although the untrusted device 30 may be used to initiate a tire pressure check and provide a convenient means for the user 28 to understand the results of the measurement it may not have DAL certification, while the operation of the tire pressure monitoring device 10 to provide the indication using the LED 18 on the tire pressure monitoring device 10 may be certified to Development Assurance Level B. This may allow the system to operate with a wide range of untrusted devices 30, because certification of those devices to a DAL is not required, but still ensure that the system as a whole meets required safety standards. Similarly, in some examples, the tire pressure monitoring device 10 may have a higher Security Assurance Level (SAL) than the untrusted device 30.

First, at block 502, the tire pressure monitoring device 10 receives a command to check pressures over via its second transceiver 17 from the untrusted device 30. In response, at block 504, the processor 12 uses the pressure sensor 20 to measure the pressure in the tire. The measured pressure is then compared in block 506 against the reference pressure stored in the configuration data 26 to determine whether the tire has low pressure. In this example low pressure occurs if the pressure sensed by the pressure sensor 20 is less than 89% of the reference pressure. Other examples may determine a low pressure when the measured pressure is less than 100%, less than 95%, less than 90% or less than 85% of the reference pressure. Further examples may determine a low pressure when the measured pressure is at least about 207 kPa (about 30 psi) less than the reference pressure. Other examples may determine a low pressure when the measured pressure is at least about 138 kPa (about 20 psi), or about 69 kPa (about 10 psi) less than the reference pressure. If low pressure is detected, execution proceeds to block 508, otherwise execution proceeds to block 512.

At block 508, the processor 12 uses the LED 18 to indicate a low pressure condition, for example by providing a solid red light for a predetermined period. The predetermined period may be 5 minutes, 2 minutes, 1 minute, or 30 seconds, for example. The processor 12 also broadcasts a low pressure indication to the other tire monitoring devices at block 510, again using the second transceiver 17. In some examples, the LED 18 can additionally or alternatively be turned off following a command from the user, transmitted using the untrusted device 30.

At block 512, the processor 12 checks to see whether any low pressure messages from other tire pressure monitoring devices 202,204,206,208,210 have been received via the second transceiver 17. Such low pressure messages may be received directly, via other tire pressure monitoring devices 202,204,206,208,210 or through a hub or access point. In this example, such low pressure messages are received without first being requested, following the receipt of the command in block 504. In other examples, the low pressure message may be received responsive to a status enquiry sent by the tire pressure monitoring device 10 to the other tire pressure monitoring devices 202,204,206,208,210. If any low pressure messages are received, execution proceeds to block 514, where the processor 12 uses the LED 18 to display a low pressure condition. For example, the low pressure indication may be the same as that used in block 508. In other examples, the low pressure indication may be different than that used in block 508, for example a second low pressure indication such as a flashing red light for a predetermined period. By using the second low pressure indication, the tire pressure monitoring device 10 can indicate a low pressure in another tire yet signal that its own measured pressure is not low.

If no low pressure messages are received at block 512, execution proceeds to block 516 where the processor 12 uses the LED 18 to provide an "OK" indication. For example, by providing a solid green light for a predetermined period. The predetermined period may be 5 minutes, 2 minutes, 1 minute, or 30 seconds, for example. In this way, the "OK" indication is only given when all tire pressure monitoring devices 10,202,204,206,208,210 have determined that the pressure of their associated tire is not low and that they have not received an indication of a low pressure from another of the tire pressure monitoring devices. In some examples, the LED 18 can additionally or alternatively be turned off following a command from the user, transmitted using the untrusted device 30.

Finally, at block 518, the data of the measured tire pressure is transmitted to the untrusted device 30 in response to the command. This data may include further information such as stored reference pressure, pressure history data, determined status, and wheel position. Transmission of additional information may allow verification of the correct operation of the tire pressure monitoring device 10 and a check that the configuration data 26 stored in the memory 14 has not changed or has been set up correctly. The transmission in block 518 may be sent directly to the untrusted device 30, to another tire pressure monitoring device 202,204,206,208,210 for onward routing, or to an access point or other wireless node.

With the method of Figure 5, confirmation of tire pressure status is provided by the tire pressure monitoring devices 10,202,204,206,208,210 themselves. A low pressure in any tire pressure monitoring device 10,202,204,206,208,210 causes all the tire pressure monitoring devices 10,202,204,206,208,210 to indicate a low pressure. In this way, the tire pressure monitoring devices 10,202,204,206,208,210 may be certified according to a required DAL and/or SAL using the indication on the tire pressure monitoring devices 10,202,204,206,208,210 themselves without requiring the untrusted device 30 to also be certified.

In other examples, rather than transmitting a low pressure indication at block 510, all tire pressure monitoring devices 10,202,204,206,208,210 may instead transmit their measured pressure to other tire pressure monitoring devices 10,202,204,206,208,210. Received pressures may then be independently checked by each independent tire pressure monitoring device 10,202,204,206,208,210 to determine whether low pressures exist. This may guard against a low pressure in a tire pressure monitoring device 10,202,204,206,208,210 which does not indicate a low pressure condition, for example if the stored reference pressure has become corrupted.

In further examples, the tire pressure monitoring device 10 may transmit an "OK" status notification when it is determined that the tire pressure is not low in block 506. Such examples may provide assurance that all sensors are operating correctly, because if no data is received from one of the other tire pressure monitoring devices 10,202,204,206,208,210 it is indicative of a malfunction or low pressure in that tire monitoring device.

In some examples, where low pressure is indicated the relevant tire must be checked and serviced, for example reinflated or replaced, before repeating the tire pressure check of Figure 5. This procedure may be repeated until all tire pressure monitoring devices 10,202,204,206,208,210 transmit an "OK" status notification.

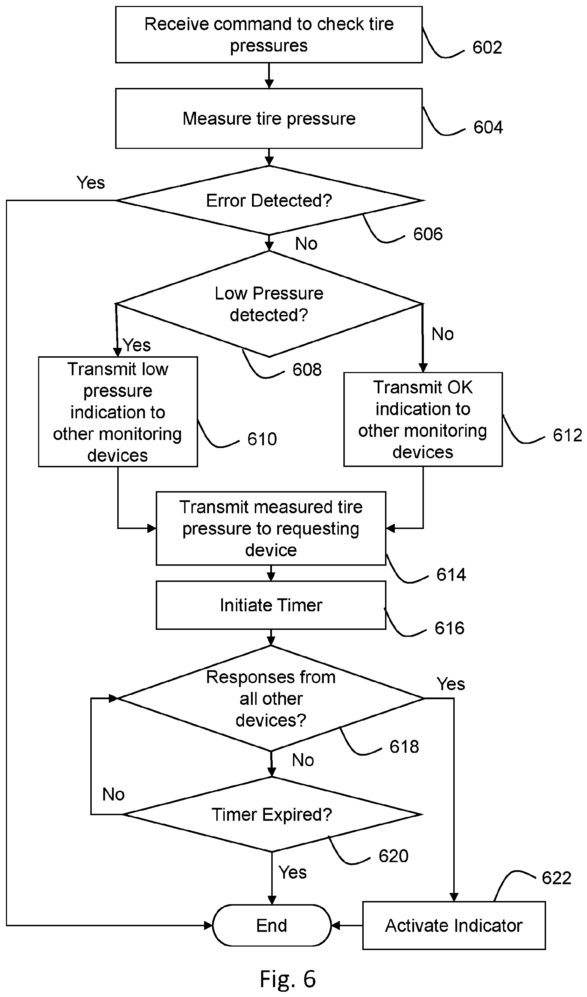

It can be useful for the system to be able to identify errors and indicate these in a clear way. It is also useful that in the presence of an error the system fails safe, so that the likelihood of erroneous results being relied on is reduced. Figure 6 depicts a method for a tire monitoring device, such as the tire monitoring device 10 of Figure 1 above, which can provide an indication of an error. A case in which a tire monitoring device 10,202,204,206,208,210 has an error may be referred to as an altered operational mode of the tire monitoring device 10,202,204,206,208,210.

First, at block 602, the tire pressure monitoring device 10 receives a command or instruction to check tire pressures from the untrusted device 30 via the transceiver 16. The tire pressure monitoring device 10 then proceeds to measure the pressure of the tire associated with the tire pressure monitoring device 10 at block 604 using the pressure sensor 20. The result of the measurement is stored in the memory 14 and the method continues to block 606.

At block 606, the tire pressure monitoring device 10 checks for errors. This may be carried out in any suitable manner. For example, error checks may be carried out on the memory 14 and/or on the operation of the hardware of the tire pressure monitoring device 10. Should any of these error checks indicate that the tire pressure monitoring device 10 has a defective component or an error, such as a corrupt memory or a hardware fault, the error status is noted. For example, a flag or other variable may be set or initiated which indicates that there is an error. In some examples, a variable may be assigned a value corresponding to the source of the error, such as an error with the pressure sensor 20, a storage error, a configuration error, and so on. Another example of an error is an error with the transceiver 16, such as an error with the second transceiver 17 which means that the tire pressure monitoring device 10 is unable to communicate with the other tire pressure monitoring devices 202,204,206,208,210 in the system 200. If it is determined that there is an error, execution ends. If it is determined that there is no error, execution proceeds to block 608.

Because execution ends when an error is detected, the method of Figure 6 means that no response is sent to other devices in the system, such as the untrusted device 30 or other tire pressure monitoring devices 202,204,206,208,210. In this way, the absence of a response can indicate an error. In addition, because the process ends at this point, the LED 18 on the tire pressure monitoring device 10 itself is not activated in the presence of an error.

At block 608, the pressure measurement is reviewed against the reference pressure to determine whether it is acceptable. For example, the same process may be carried out as in block 506 described above with reference to Figure 5. If the pressure is determined to be low, execution proceeds to block 610. Otherwise, if the pressure is determined not to be low, i.e., the pressure is acceptable, execution proceeds to block 612.

At block 610, the tire pressure monitoring device 10 transmits a low pressure indication to others of the tire pressure monitoring devices 202,204,206,208,210. At block 612, the tire pressure monitoring device 10 transmits an "OK" indication to other tire pressure monitoring devices 202,204,206,208,210. Thus, the status of the tire monitored by the tire pressure monitoring device 10 is transmitted to the other tire pressure monitoring devices 202,204,206,208,210 in the system 200.

From blocks 610 and 612, execution proceeds to block 614. At block 614 the measured tire pressure is transmitted to the untrusted device 30. For example, the numerical value of the tire pressure may be transmitted, along with details of reference pressure in some examples. Alternatively, the same "low pressure" or "OK" indication may be transmitted also to the untrusted device 30.

Next, at block 616, a timer is initiated. The timer allows a set period for responses from other tire pressure monitoring devices 202,204,206,208,210 in the system 200 to be received. For example, the timer may be set for 30 seconds, 1 minute, 2 minutes, 3 minutes, 4 minutes or 5 minutes.

After the timer has been initiated, the tire pressure monitoring device 10 checks whether it has received responses from all the other tire pressure monitoring devices 202,204,206,208,210 associated with the same aircraft at block 618. For example, the tire pressure monitoring device 10 may store the position identifiers of other wheels associated with the same aircraft and check whether responses are received for all of those position identifiers. In another example, the tire pressure monitoring device 10 may know how many other tire pressure monitoring devices are in the system 200, such as five in the case of a six-wheeled aircraft, and check whether the same number of responses have been received as there are other devices in the system. If responses from all the other tire pressure monitoring devices in the system 200 have been received, execution proceeds to block 622. Otherwise, execution proceeds to block 620.

In block 620, it is checked whether the timer has expired or reached a threshold level of time. For example the timer may be set for 30 seconds, 1 minute, 2 minutes, 3 minutes, 4 minutes, or 5 minutes as discussed above. If the timer has expired, then the process ends. As with detection of an error in block 606, this means that if the timer expires without receiving responses from all the other tire pressure monitoring devices 202,204,206,208,210 in the system, no indication is provided by the tire pressure monitoring device 10. Thus, if there is an error in any of the other tire pressure monitoring devices 202,204,206,208,210, no indication will be provided by the tire pressure monitoring device 10. All the tire pressure monitoring devices 10,202,204,206,208,210 in the system 200 will therefore provide no indication in the event that any other device has an error because in that case no transmission is made by the device experiencing an error. The system fails safe because if any device is totally inoperable it will also provide no indication.

At block 622, the LED 18 is activated depending on the status of the tire pressure monitoring device 10 itself and on the responses received from other tire pressure monitoring devices 202,204,206,208,210. For example, the LED 18 may be activated to provide an OK indication only if the pressure of the tire pressure monitoring device 10 itself is OK or acceptable and all of the received responses indicate that the pressure of other devices is OK or acceptable. Activating the LED 18 can be carried out in the same way as described above with respect to blocks 506, 508, 512, 514 and 516 of Figure 5.

The method of Figure 6 therefore provides a method of operating a tire monitoring device in which an error status can be shown by not activating an indicator.

In the method of this example, the transmission of data representing the status of the tire pressure monitoring device 10, such as the low pressure indication of block 610 and the OK indication of block 612, is sent only when it is determined that there is no error. Thus, receiving no response from a particular tire monitoring device is representative of an error in the tire monitoring device. In some examples, the transmission in blocks 610 and 612 may instead be replaced by a transmission of the actual measured data, such as a measured pressure and/or temperature, possibly also with information of a reference pressure.

The activating of the LED 18 requires both a determination that there is no error and that responses have been received from all other tire pressure monitoring devices 202,204,206,208,210 in the system 200. Thus, the activation of the LED 18 only occurs when no error is determined in the tire pressure monitoring device 10 itself and in the other tire pressure monitoring devices 10 in the system 200.

The transmission of status information, such as measured tire pressure, in block 614 only happens if no error is detected. If the untrusted device 30 receives no response to a measurement command, this can be interpreted as indicative of an error in any tire monitoring device which does not provide a response.

It will be appreciated that the user 28 may still desire to obtain an indication as to whether the pressure sensed by the pressure sensor 20 of the tire pressure monitoring device 10 matches, or is within a pre-determined threshold value from, the reference pressure that forms part of the configuration data 26 stored in the memory 14, even when an error occurs. Accordingly, when the tire pressure monitoring device 10 is operating in an altered operational mode, in which there is an error associated with one or more hardware and/or software components of the tire pressure monitoring device 10, the user 28 can use the untrusted device 30 to obtain such an indication from the tire pressure monitoring device 30.

When the user 28 has established that the tire pressure monitoring device 10 is operating in an altered operational mode, or indeed when at least one of the tire pressure monitoring devices 10,202,204,206,208,210 of the system is operating in an altered operational mode, the user 28 can approach the tire pressure monitoring devices 10,202,204,206,208,210 individually to obtain their respective status information. This is in contrast to the method of Figure 5, for example, where the tire pressure monitoring devices 10,202,204,206,208,210 communicate amongst one another to provide status information to the user 28.

To obtain status information from the tire pressure monitoring device 10 when operating in the altered operational mode, the user 28 sends an activation signal to the tire pressure monitoring device 10 using the untrusted device 30. This is achieved by the user 28 bringing the untrusted device 30 close to the tire pressure monitoring device 10, and using a NFC signal to wake the tire pressure monitoring device 10 from a sleep mode into an awake mode in which the tire pressure monitoring device 10 can receive requests from the untrusted device 30. The user 28 then uses the untrusted device 30 to send a request to the tire pressure monitoring device 10 to perform a tire pressure check. The request can be sent via NFC to the first transceiver 15, or via Bluetooth the second transceiver 17, depending on which of the first transceiver 15 and second transceiver 17 is operational.

In response to the request for the tire pressure check, the tire pressure monitoring device 10 performs steps similar to those outlined above in relation to the tire pressure check illustrated in Figure 5. The processor 12 uses the pressure sensor 20 to measure the pressure in the tire. The measured pressure is then compared against the reference pressure stored in the configuration data 26 to determine whether the tire has low pressure.

The processor 12 then either uses the LED 18 to indicate a low pressure condition, for example by providing a solid red light for a predetermined period, or uses the LED 18 to provide an "OK" indication, for example by providing a solid green light for a predetermined period.

The tire pressure monitoring device 10 can also transmit further status information to the untrusted device 30 in response to the request from the untrusted device 30. Such further status information can include any of a temperature measured by the temperature sensor 22, historical pressure and/or temperature readings stored by the tire pressure monitoring device 10, information regarding inoperability of at least one hardware component of the tire pressure monitoring device 10, information regarding inoperability of at least one software component of the tire pressure monitoring device 10, and information regarding an inability of the tire pressure monitoring device 10 to communicate with the other tire pressure monitoring devices 202,204,206,208,210. The status information can, for example, be utilised by either the untrusted device 30, or the user 28, to determine or present any error present in the tire pressure monitoring device 10.

Once the user 28 has finished the tire pressure check at the tire pressure monitoring device 10, the user 28 can move around the aircraft 100, and can activate and request similar tire pressure checks at each of the other tire pressure monitoring devices 202,204,206,208,210.

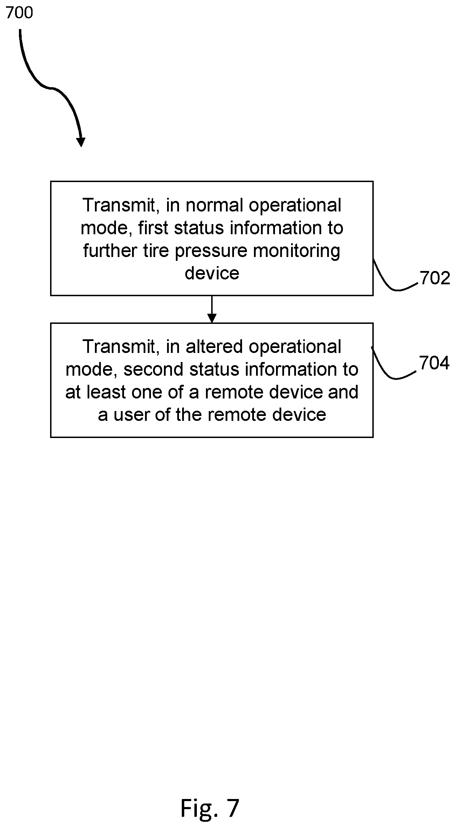

A method 700 in accordance with the above is illustrated in Figure 7. The method 700 comprises transmitting 702, when a first tire pressure monitoring device is in a normal operational mode, and in response to a first request, first status information from the first tire pressure monitoring device to a second tire pressure monitoring device. The method 700 comprises transmitting 704, when the first tire monitoring device is in an altered operational mode, and in response to a second request, second status information from the first tire monitoring device to at least one of a remote device and a user of the remote device. The second status information comprises an indication as to whether a pressure sensed by the first tire monitoring device is within a pre-determined threshold from a reference pressure stored by the first tire monitoring device.

In such a manner, the tire pressure monitoring devices 10,202,204,206,208,210 can operate in a normal mode of operation, in which any of the tire pressure monitoring devices 10,202,204,206,208,210 can act as a point of interrogation for a user wishing to ascertain whether the pressures measured by all of the tire pressure monitoring devices 10,202,204,206,208,210 match or are within a threshold of their respective reference pressures. In particular, the LED 18 of the tire pressure monitoring device 10,202,204,206,208,210 that acts as the point of interrogation will illuminate green to communicate when measured pressures match corresponding reference pressures, and will illuminate red when any measured pressure does not match the corresponding reference pressure. The other tire pressure monitoring devices 10,202,204,206,208,210 that are not acting as the point of interrogation can either illuminate in the same way as the tire pressure monitoring device 10,202,204,206,208,210 that acts as the point of interrogation, or can remain unilluminated. This may, for example, provide for improved speed of a tire check process, by enabling the user to stand at one tire pressure monitoring device 10,202,204,206,208,210 to interrogate any of the other tire pressure monitoring devices 10,202,204,206,208,210, thereby negating the need for a user to walk between tire pressure monitoring devices 10,202,204,206,208,210 to perform plural respective tire checks.

The tire pressure monitoring devices 10,202,204,206,208,210 can then operate in an altered operational mode, where the tire pressure monitoring device 10,202,204,206,208,210 is experiencing an error in intended operation, whilst still being able to communicate the results of a tire pressure check. In particular, the tire pressure monitoring devices 10,202,204,206,208,210 can, in response to a request, communicate status information to the untrusted device 30 and/or to the user 28.

It is to noted that the term "or" as used herein is to be interpreted to mean "and/or", unless expressly stated otherwise.

## Claims

1. A tire monitoring device configured to operate in:
a normal mode in which the tire monitoring device is configured to, in response to a first request, transmit first status information to a further tire monitoring device; and
an altered operational mode in which the tire monitoring device is configured to, in response to a second request, transmit second status information to at least one of a remote device and a user of the remote device, the second status information comprising an indication as to whether a pressure sensed by the tire monitoring device is within a pre-determined threshold from a reference pressure stored by the tire monitoring device.

2. The tire monitoring device according to Claim 1, wherein, in the altered operational mode, the tire monitoring device is configured to, in response to an activation signal received from the remote device, transition from a sleep mode in which the tire monitoring device is unable to receive the second request, to an awake mode in which the tire monitoring device is able to receive the second request, and optionally wherein, in the altered operational mode, the tire monitoring device is configured to receive the activation signal via a short range communication protocol.

3. The tire monitoring device according to any one of the preceding claims, wherein the second status information comprises at least one of a pressure sensed by the tire monitoring device, a temperature sensed by the tire monitoring device, historical pressure and/or temperature readings stored by the tire monitoring device, information regarding inoperability of at least one hardware component of the tire monitoring device, information regarding inoperability of at least one software component of the tire monitoring device, and information regarding an inability of the tire monitoring device to communicate with the further tire monitoring device.

4. The tire monitoring device according to any one of the preceding claims, wherein the tire monitoring device comprises a transmitter configured to transmit a status signal that encodes the second status information, wherein the status signal is configured to be received and understood by a human, optionally wherein at least one of:
the transmitter comprises a visual indicator, and the status signal comprises a visual signal; and
in the normal operational mode, the transmitter is configured to transmit a further status signal that encodes the first status information, wherein the further status signal is configured to be received and understood by a human.

5. The tire monitoring device according to any one of the preceding claims, wherein, in the normal operational mode, the tire monitoring device is configured to, in response to a third request, transmit third status information to at least one of the remote device and a user of the remote device, the third status information comprising an indication as to whether a pressure sensed by the tire monitoring device is within the pre-determined threshold from a reference pressure stored by the tire monitoring device.

6. The tire monitoring device according to any one of the preceding claims, wherein the tire monitoring device is an aircraft tire monitoring device.

7. A system comprising a tire monitoring device according to any one of the preceding claims, and a further tire monitoring device configured to transmit the first request to the tire monitoring device, and receive the first status information from the tire monitoring device and optionally wherein the further tire monitoring device is configured to, when the further tire monitoring device is in an altered operational mode, and in response to a status request received from the remote device, transmit further device status information to at least one of the remote device and a user of the remote device.

8. An aircraft comprising the tire monitoring device according to any one of Claims 1 to 6, or the system according to Claim 7.

9. A data carrier comprising machine readable instructions that, when executed, cause operation of one or more processors of a tire monitoring device to:
when the tire monitoring device is in a normal operational mode, and in response to a first request, cause transmission of first status information to a further tire monitoring device; and
when the tire monitoring device is in an altered operational mode, and in response to a second request, cause transmission of second status information to at least one of a remote device and a user of the remote device, the second status information comprising an indication as to whether a pressure sensed by the tire monitoring device is within a pre-determined threshold from a reference pressure stored by the tire monitoring device.

10. A method comprising:
transmitting, when a first tire monitoring device is in a normal operational mode, and in response to a first request, first status information from the first tire monitoring device to a second tire monitoring device; and
transmitting, when the first tire monitoring device is in an altered operational mode, and in response to a second request, second status information from the first tire monitoring device to at least one of a remote device and a user of the remote device, the second status information comprising an indication as to whether a pressure sensed by the first tire monitoring device is within a pre-determined threshold from a reference pressure stored by the first tire monitoring device.

11. The method according to Claim 10, wherein the method comprises:
receiving, at the first tire monitoring device and from the second tire monitoring device, the first request; and/or
receiving, at the first tire monitoring device and from the remote device, the second request.

12. The method according to Claim 10 or Claim 11, wherein, prior to transmitting the second status information, the method comprises receiving, at the first tire monitoring device and from the remote device, an activation signal, and based on the activation signal and at the first tire monitoring device transitioning from a sleep mode in which the first tire monitoring device is unable to receive the second request, to an awake mode in which the first tire monitoring device is able to receive the second request.

13. The method according to any one of Claims 10 to 12, wherein the method comprises, when the first tire monitoring device is in the altered operational mode, transmitting, using a transmitter of the first tire monitoring device, a status signal that encodes the second status information, wherein the status signal is configured to be received and understood by a human and optionally wherein the transmitter comprises a visual indicator, and the status signal comprises a visual signal.

14. The method according to any one of claims 10 to 13, wherein, the method comprises, when the first tire monitoring device is in the normal operational mode, transmitting, using a transmitter of the first tire monitoring device, a further status signal that encodes the first status information, wherein the further status signal is configured to be received and understood by a human.

15. The method according to any one of the Claims 10 to 14, wherein the method comprises, when the first tire monitoring device is in the normal operational mode and in response to a third request, transmitting third status information from the first tire monitoring device to at least one of the remote device and a user of the remote device, the third status information comprising an indication as to whether a pressure sensed by the first tire monitoring device is within the pre-determined threshold from a reference pressure stored by the first tire monitoring device.
